# EUROPÄISCHE PATENTSCHRIFT

(11) **EP 4 157 055 B1**
(45) Veröffentlichungstag und Bekanntmachung des Hinweises auf die Patenterteilung: **08.10.2025**
(21) Anmeldenummer: 21728492.6
(22) Anmeldetag: 19.05.2021
(51) Int. Cl.: A47L 15/42, A47L 15/00, G01N 21/94, G01N 21/88, G01J 3/10, G01J 3/32, G01J 3/42, G01N 21/31

(54) **SYSTEM MIT EINER GESCHIRRSPÜLMASCHINE UND VERFAHREN ZUM BETREIBEN EINER GESCHIRRSPÜLMASCHINE**
SYSTEM COMPRISING A DISHWASHER AND METHOD FOR OPERATING A DISHWASHER
SYSTÈME COMPRENANT UN LAVE-VAISSELLE, ET PROCÉDÉ DE FONCTIONNEMENT D'UN LAVE-VAISSELLE

(30) Priorität: 25.05.2020 DE 102020206488
(43) Veröffentlichungstag der Anmeldung: 05.04.2023
(73) Patentinhaber: BSH Hausgeräte GmbH, 81739 München (DE)
(72) Erfinder: CALVIMONTES, Alfredo, 89407 Dillingen a. d. Donau (DE); NEUMAIER, Philipp, 10245 Berlin (DE)
(86) Internationale Anmeldenummer: PCT/EP2021/063278
(87) Internationale Veröffentlichungsnummer: WO 2021/239537

(56) Entgegenhaltungen:
- EP-A1- 3 168 602
- EP-A2- 1 116 471
- WO-A1-2019/015990
- DE-A1- 10 048 081
- DE-A1- 102016 106 430
- DE-A1- 102016 212 976
- JP-A- 2018 031 598
- NL-A- 1 041 809
- US-A1- 2013 229 646
- US-A1- 2013 258 314
- US-A1- 2019 244 375

## Beschreibung

Die vorliegende Erfindung betrifft ein System mit einer Geschirrspülmaschine und ein Verfahren zum Betreiben einer Geschirrspülmaschine.

Die Reinigungsleistung einer Geschirrspülmaschine hängt unter anderem davon ab, dass für eine bestimmte Art und Menge der Anschmutzung das richtige Spülprogramm und das richtige Reinigungsmittel gewählt wird. Daher ist es erwünscht, dass die Anschmutzung möglichst genau bekannt ist, um das Spülprogramm entsprechend zu optimieren.

DE 10 2015 209 984 A1 offenbart eine Vorrichtung und ein Verfahren zur Bestimmung der Schmutzfracht in einer Spülflotte in einem wasserführenden Haushaltsgerät, beispielsweise in einer Geschirrspülmaschine. Hierbei wird Nahinfrarotspektroskopie dazu verwendet, spezifisch die Art und Menge der Schmutzfracht in der Spülflotte zu bestimmen.

US 2019/0244375 A1 offenbart ein Geschirrspülsystem und -verfahren, umfassend eine Lichtquelle, die so konfiguriert ist, dass sie einen Geschirrartikel beleuchtet. Ein Abbildungssystem ist so konfiguriert, dass es mindestens ein Bild des Geschirrartikels aufnimmt. Ein Verarbeitungssystem ist so konfiguriert, dass es das mindestens eine Bild analysiert, um das Vorhandensein eines Flecks auf dem Geschirrteil zu bestimmen.

EP 1 116 471 A2 offenbart eine Geschirrspülmaschine mit einem Spülbehälter zum Reinigen eines zu reinigenden Guts und mit Sendeelementen und Empfangselementen, um elektromagnetische Strahlung auf das Gut einzustrahlen und reflektierte/transmittierte Strahlung zu empfangen, um daraus eine Information über Art und Stärke von Verunreinigungen zu gewinnen.

Vor diesem Hintergrund besteht eine Aufgabe der vorliegenden Erfindung darin, den Betrieb einer Geschirrspülmaschine weiter zu verbessern.

Gemäß einem ersten Aspekt wird ein System mit einer Geschirrspülmaschine, vorzugsweise einer Haushaltsgeschirrspülmaschine, mit einer Steuerungsvorrichtung zum Durchführen eines Spülprogramms zum Spülen von in einem Spülraum anordenbarem Spülgut, mit einer Bilderfassungseinrichtung zum Erfassen eines Bildes von in dem Spülraum angeordnetem Spülgut, wobei das Bild eine Mehrzahl von Teilbildern umfasst, von denen jedes eine unterschiedliche spektrale Information des Spülguts aufweist, mit einer Beleuchtungseinheit zum Beleuchten des in dem Spülraum angeordneten Spülguts, mit einer Referenzvorrichtung zum Bereitstellen einer Referenz-Oberfläche in dem Spülraum, mit einer Bildanalyseeinheit, die dazu eingerichtet ist, das erfasste Bild von der Bilderfassungseinrichtung zu empfangen und auf Basis der Mehrzahl von Teilbildern des empfangenen Bildes eine chemische Analyse einer Anschmutzung des Spülguts durchzuführen und als ein Ergebnis der chemischen Analyse eine Schmutz-Charakteristik der Anschmutzung zu ermitteln, wobei ein jeweiliges Teilbild in Abhängigkeit einer Intensität des von der Referenz-Oberfläche reflektierten Lichts kalibriert wird, vorgeschlagen. Die Steuerungsvorrichtung ist dazu eingerichtet, die Schmutz-Charakteristik zu empfangen und das Spülprogramm zum Spülen des Spülguts in Abhängigkeit der empfangenen Schmutz-Charakteristik anzupassen.

Das vorgeschlagene System hat den Vorteil, dass ein individuell abgestimmtes Spülprogramm durch die Steuerungsvorrichtung auf Basis des tatsächlich auf dem Spülgut vorhandenen Schmutzes ermittelt wird. Damit lässt sich einerseits die Reinigungsleistung der Geschirrspülmaschine verbessern, andererseits wird eine Effizienz der Geschirrspülmaschine erhöht. Dies insbesondere, da eine Wassermenge, eine Energiemenge, eine Reinigungsmittelart und eine Reinigungsmittelmenge, die zum Durchführen des Spülprogramms verwendet werden, auf Basis des vorhandenen Schmutzes optimal einstellbar sind.

Die Steuerungsvorrichtung kann hardwaretechnisch und/oder softwaretechnisch implementiert sein. Bei einer hardwaretechnischen Implementierung kann die Steuerungsvorrichtung zum Beispiel als Computer oder als Mikroprozessor ausgebildet sein. Bei einer softwaretechnischen Implementierung kann die Steuerungsvorrichtung als Computerprogrammprodukt, als eine Funktion, als eine Routine, als Teil eines Programmcodes oder als ausführbares Objekt ausgebildet sein.

Die Bilderfassungseinrichtung ist beispielsweise als ein digitaler Bildsensor ausgebildet, wie ein CCD (engl.: charge-coupled-device) oder ein CMOS (engl.: complementary metaloxide-semiconductor), der eine Mehrzahl an Bildpunkten, auch Pixel genannt, aufweist. Zum Beispiel umfasst der Bildsensor wenigstens 1 MP (MP = Megapixel), vorzugsweise wenigstens 5 MP, weiter bevorzugt über 8 MP. Je höher die Pixelzahl, um so besser ist die räumliche Auflösung des Bildsensors.

Die Bilderfassungseinrichtung erfasst das Bild des Spülguts derart, dass dieses mehrere Teilbilder umfasst, die jeweils eine unterschiedliche spektrale Information des Spülguts aufweisen. Ein Beispiel hierfür ist ein RGB-Bild (RGB: Rot-Grün-Blau), bei dem für jeden der Farbkanäle ein Teilbild erfasst oder erzeugt wird, das sich aus dem Bild extrahieren lässt. Man kann auch sagen, dass die Bilderfassungseinrichtung eine Mehrzahl an Bildern mit jeweils unterschiedlicher spektraler Information als einen Datensatz ausgibt. Die Bilderfassungseinrichtung kann die Teilbilder auch einzeln ausgeben, wobei dann ein jeweiliges Teilbild beispielsweise eine Information enthält, die es als Teilbild eines Bildes kennzeichnet, so dass die zu einem Bild gehörigen Teilbilder identifizierbar sind.

Das von der Bilderfassungseinrichtung erfasste Bild kann auch als Hyperspektralbild bezeichnet werden.

Die Bilderfassungseinrichtung ist derart angeordnet, dass diese das Innere des Spülbehälters "sehen" kann, das heißt, dass ein Bildfeld oder Bildwinkel der Bilderfassungseinrichtung den Innenraum des Spülbehälters zumindest teilweise umfasst. Beispielsweise ist die Bilderfassungseinrichtung in dem Spülbehälter oder in einer entsprechenden Aussparung mit einem Fenster in den Spülbehälter hinein angeordnet. Auf dem erfassten Bild ist daher beispielsweise das in dem Spülraum angeordnete Spülgut (zumindest teilweise) sichtbar und damit auch auf dem Spülgut haftender Schmutz.

Die Beleuchtungseinheit ist zum Beleuchten des Spülguts eingerichtet, wobei sie insbesondere während des Erfassens des Bildes oder der mehreren Teilbilder durch die Bilderfassungseinrichtung das Spülgut beleuchtet.

Die Bildanalyseeinheit empfängt das erfasste Bild von der Bilderfassungseinrichtung und führt eine chemische Analyse einer Anschmutzung des Spülguts durch. Hierzu analysiert die Bildanalyseeinheit beispielsweise jedes der mehreren Teilbilder des empfangenen Bildes einzeln und/oder in Korrelation mit wenigstens einem weiteren der mehreren Teilbilder. Unter Analysieren wird vorliegend insbesondere das Anwenden von Bildverarbeitungs-Algorithmen und/oder das Durchführen von Bildtransformationen auf ein jeweiliges Teilbild verstanden. Die Bildanalyseeinheit ist insbesondere dazu eingerichtet, die chemische Analyse selektiv auf einzelne Bildbereiche zu beschränken. Beispielsweise führt die Bildanalyseeinheit eine Objekterkennung durch, um die für die chemische Analyse relevanten Bildbereiche zu ermitteln. Beispielsweise erkennt die Bildanalyseeinheit mittels der Objekterkennung, wo in dem Bild Spülgut sichtbar ist, und wo beispielsweise eine Innenwand des Spülraums zu sehen ist.

Die Bildanalyseeinheit kann hardwaretechnisch und/oder softwaretechnisch implementiert sein. Bei einer hardwaretechnischen Implementierung kann die Bildanalyseeinheit zum Beispiel als Computer oder als Mikroprozessor ausgebildet sein. Bei einer softwaretechnischen Implementierung kann die Bildanalyseeinheit als Computerprogrammprodukt, als eine Funktion, als eine Routine, als Teil eines Programmcodes oder als ausführbares Objekt ausgebildet sein. Die Bildanalyseeinheit kann auch ein Bestandteil der Steuerungsvorrichtung der Geschirrspülmaschine sein.

Unter einer chemischen Analyse wird vorliegend beispielsweise verstanden, dass auf Basis des erfassten Bildes eine chemische Zusammensetzung oder ein chemischer Bestandteil der Anschmutzung, soweit diese auf dem Bild sichtbar ist, ermittelt wird. Die chemische Analyse basiert vorliegend insbesondere auf einer spektralen Analyse. Unterschiedliche chemische Substanzen oder Moleküle weisen beispielsweise unterschiedliche Absorptionsbanden auf. Eine Absorptionsbande ist ein spektraler Bereich, in dem die Substanz eine erhöhte Absorption hat. Je schärfer eine Absorptionsbande ist, das heißt je schmaler und höher die Absorptionsbande ist, um so besser eignet sich diese für eine chemische Analyse. "Schmal" bezieht sich beispielswiese auf die Halbwertsbreite der Bande, auch FWHM-Wert (engl.: full width half maximum) genannt, wobei beispielsweise eine Halbwertsbreite von 100 nm oder darunter als schmal bezeichnet wird. "Hoch" bezieht sich beispielsweise auf das Absorptionsmaximum der Bande, das als Prozentzahl angegeben wird, wobei 100% komplette Absorption (also kein Signal, auch Schwarzpunkt genannt) und 0% komplette Reflektion (also maximales Signal, auch Weißpunkt genannt) des einfallenden Lichts bedeuten.

Kohlenhydrate, wie Stärke oder Zucker, weisen beispielsweise Absorptionsbanden im Bereich von 800 - 900 nm auf. Wenn ein Spülgut mit Stärke beschmutzt ist, dann werden die beschmutzten Bereiche in einem Bild, das auf einen spektralen Bereich von 800 - 900 nm beschränkt ist, dunkel erscheinen. Daher kann eine chemische Analyse beispielsweise auf Basis der Bildhelligkeit für einen jeweiligen Spektralbereich erfolgen. Vorzugsweise kann eine ermittelte mittlere Helligkeit mit Referenzwerten verglichen werden, die beispielsweise in einem Labor unter genauer Kontrolle einer Zusammensetzung der Anschmutzung ermittelt wurden.

Die Schmutz-Charakteristik enthält das Ergebnis der chemischen Analyse. Insbesondere umfasst die Schmutz-Charakteristik eine Anzahl an Kategorien, wobei eine jeweilige Kategorie beispielsweise für eine Substanz oder eine Substanz-Klasse steht, wie Beispielsweise Proteine, Lipide, Kohlenhydrate, Farbstoffe, Feuchte, verkohlte Speisereste und dergleichen. Farbinformationen können weiterhin dazu dienen, die ursprüngliche Speise zu ermitteln, wie beispielsweise Karotten, Rote Beete, Kaffee, Tee, Kirschen und so weiter, wodurch sich Spülprogramm noch genauer anpassen lässt. Diese Schmutz-Charakteristik kann daher auch deutlich spezifischer sein als die oben angegebenen Kategorien.

Die Schmutz-Charakteristik enthält beispielsweise Prozent-Angaben in Bezug auf eine jeweilige Substanz. Wenn beispielsweise die Substanzen Proteine, Lipide und Kohlenhydrate unterschieden werden, kann eine beispielhafte Schmutz-Charakteristik die Angaben 20% Protein, 30% Lipide, 35% Kohlenhydrate und 15% unbestimmt umfassen, wobei sich die Kategorie "Unbestimmt" insbesondere auf diejenigen analysierten Bildbereiche bezieht, die nicht einer der Kategorien zugeordnet werden konnten.

Auf Basis der Schmutz-Charakteristik lässt sich das Spülprogramm optimal anpassen oder einstellen. Man kann auch sagen, dass die Steuerungsvorrichtung ein optimiertes Spülprogramm ermittelt. Das heißt beispielsweise, dass Spülprogramm-Parameter in Abhängigkeit der Schmutz-Charakteristik für jeden Spülprogrammdurchlauf neu ermittelt und entsprechend gesetzt werden. Spülprogrammparameter umfassen insbesondere eine Laufzeit eines Teilprogrammschritts, eine Spülflottentemperatur für einen jeweiligen Teilprogrammschritt oder einen Zeitpunkt während des Spülprogrammdurchlaufs, eine Spülflottenmenge für einen jeweiligen Teilprogrammschritt, eine Reinigungsmittelmenge und - zusammensetzung sowie Dosierzeitpunkte des Reinigungsmittels, eine Pumpendrehzahl und dergleichen mehr. Ein Teilprogrammschritt ist beispielsweise ein Vorspülen, ein Hauptspülen, ein Klarspülen und ein Trocknen. Darüber hinaus können weitere Teilprogrammschritte vorgesehen sein. Man kann das Spülprogramm auch als ein Ganzes betrachten, ohne eine Untergliederung in Teilprogrammschritte vorzunehmen, wobei dann beispielsweise eine Zeitdauer seit einem Startzeitpunkt des Spülprogramms als Bezugsgröße dienen kann. So kann beispielsweise eine Spülflottenmengenverlauf und ein Temperaturverlauf für die Spülflotte für jeden Zeitpunkt des geplanten Spülprogrammdurchlaufs ermittelt werden. Das auf diese Weise ermittelte optimierte Spülprogramm weist somit eine sehr hohe Flexibilität auf.

Weiterhin kann während der Durchführung des Spülprogramms mehrfach das Bild erfasst und die chemische Analyse vorgenommen werden. Damit kann beispielsweise nach Hauptspülen ermittelt werden, ob noch Anschmutzungen auf dem Spülgut vorhanden sind und falls ja, welcher Art diese Anschmutzungen sind. Entsprechend kann die Steuerungsvorrichtung das weitere Spülprogramm anpassen.

Das erfasste Bild kann ferner zur Ermittlung des Beladungszustands der Geschirrspülmaschine genutzt werden.

Gemäß einer Ausführungsform weist die Bilderfassungseinrichtung einen digitalen Bildsensor mit einer spektralen Empfindlichkeit im Bereich von 360 nm - 980 nm, vorzugsweise im Bereich von 300 nm - 1200 nm, auf.

Je breiter die spektrale Empfindlichkeit des Sensors ist, um so mehr spektrale Information kann erfasst werden, was eine genauere chemische Analyse und Unterscheidung der Anschmutzung ermöglicht.

Die spektrale Empfindlichkeit hängt bei Halbleitersensoren insbesondere von deren Bandlücke ab. Beispielsweise lassen sich nur Photonen detektieren, deren Energie größer als die Bandlücke ist (die Energie eines Photons ist reziprok-proportional zu der Wellenlänge). Ein solcher Bildsensor basiert beispielsweise auf Silicium, Indium, Gallium, Arsen, Germanium, Phosphor. Insbesondere sogenannte III-V-Halbleiter (diese umfassen ein Element aus der dritten Hauptgruppe und ein Element aus der fünften Hauptgruppe des Periodensystems), wie InAs (Indiumarsenid), InP (Indiumphosphid), GaAs (Galliumarsenid) oder GaP (Galliumphosphid), weisen unterschiedliche Bandlücken auf, die gezielt zur Detektion von Photonen unterschiedlicher Energien verwendet werden können.

Der Bildsensor kann insbesondere auch mehrere, übereinander angeordnete Halbleiterschichten mit jeweils unterschiedlicher Bandlücke umfassen.

Gemäß einer weiteren Ausführungsform ist die Beleuchtungseinheit dazu eingerichtet, selektiv ein Emissionsspektrum aus einer Mehrzahl unterschiedlicher Emissionsspektren abzustrahlen.

Unter dem Emissionsspektrum wird vorliegend insbesondere die spektrale Energieverteilung des abgestrahlten Lichts verstanden. Beispielsweise weisen Natriumdampflampen ein sehr schmales Emissionsspektrum bei 589 nm auf, da dieses Licht durch elektronische Übergänge, die eine sehr genaue Energiedifferenz aufweisen, innerhalb der Elektronenhülle von Natrium entsteht.

Ein jeweiliges Emissionsspektrum ist vorzugsweise schmalbandig, das heißt beispielswese schmaler als 100 nm FWHM, bevorzugt schmaler als 50 nm FWHM, bevorzugt schmaler als 25 nm FWHM, bevorzugt schmaler als 10 nm FWHM, weiter bevorzugt schmaler als 5 nm FWHM.

Ein schmalbandiges Emissionsspektrum kann insbesondere durch einen elektronischen Übergang (wie bei Natriumdampflampen) erzeugt werden.

Ein jeweiliges Teilbild entspricht beispielsweise einem Bild, das aufgenommen wurde, als die Beleuchtungseinheit eines der Emissionsspektren zur Beleuchtung des Spülguts abstrahlte. Beispielsweise werden die unterschiedlichen Emissionsspektren nacheinander durchgefahren und es wird jeweils ein Teilbild erfasst. Auf diese Weise wird das Bild mit den mehreren Teilbildern erfasst.

In Ausführungsformen ist die Beleuchtungseinheit dazu eingerichtet, zu einem Zeitpunkt genau eines der Emissionsspektren abzustrahlen. In weiteren Ausführungsformen ist die Beleuchtungseinheit dazu eingerichtet, wenigstens zwei der mehreren Emissionsspektren zeitgleich abzustrahlen.

In Ausführungsformen sind mehrere Beleuchtungseinheiten vorgesehen, die unterschiedliche Bereiche in dem Spülraum ausleuchten und/oder die zum Abstrahlen unterschiedlicher Emissionsspektren eingerichtet sind.

Gemäß einer weiteren Ausführungsform umfasst die Beleuchtungseinheit eine Anzahl von Leuchtdioden mit jeweils unterschiedlichem Emissionsspektrum.

Leuchtdioden strahlen vorzugsweise ein schmalbandiges Emissionsspektrum ab. Die Intensität des abgestrahlten Spektrums kann beispielsweise durch die Ansteuerspannung variiert werden, was sich ebenfalls vorteilhaft ausnutzen lässt. Zudem lassen sich mehrere der verschiedenen Leuchtdioden zeitgleich ansteuern, so dass eine Mischfarbe des emittierten Lichts erzeugt wird. Auf diese Weise lässt sich das von der Beleuchtungseinheit abgestrahlte Emissionsspektrum bezüglich einer resultierenden Farbe durchstimmen. Hierbei kann ebenfalls eine Ansteuerspannung für verschiedene der Leuchtdioden unterschiedlich gewählt werden.

Gemäß einer weiteren Ausführungsform weist die Beleuchtungseinheit und/oder die Bilderfassungseinrichtung einen oder mehrere unterschiedliche Filter auf, der oder die jeweils nur für einen bestimmten, vorzugsweise schmalen, Spektralbereich durchlässig ist.

Der Filter kann ein Absorptionsfilter oder auch ein Interferenzfilter sein. Insbesondere ein Interferenzfilter kann dazu eingerichtet sein, ein schmalbandiges Signal, beispielsweise unter 30 nm FWHM bei über 90% Transmission im Maximum, durchzulassen, weshalb man auch von einem Schmalbandfilter sprechen kann.

Die Bilderfassungseinrichtung kann beispielswiese unterschiedliche Filter aufweisen, die jeweils fest vor einer Anzahl an Pixeln angeordnet sind, oder die einschwenkbar sind. Weiterhin kann die Bilderfassungseinrichtung eine Mikrooptik aufweisen, wie ein Mikrolinsenarray umfassend unterschiedliche Filter, um gefiltertes Licht gezielt auf einzelne Pixel zu leiten. Bei dieser Ausführungsform kann die Beleuchtungseinheit beispielsweise ein kontinuierliches Spektrum abstrahlen, da die Teilbilder mit der unterschiedlichen spektralen Information durch die Filter der Bilderfassungseinrichtung erzeugt werden.

Je schmalbandiger ein Emissionsspektrum ist, umso höher ist der Kontrast in Bezug auf eine Absorptionsbande, die in dem Bereich des Emissionsspektrums liegt, was die Zuordnung einer Anschmutzung zu einer chemischen Substanz verbessert.

Gemäß einer weiteren Ausführungsform ist die Beleuchtungseinheit zum Abstrahlen von mindestens fünf, vorzugsweise sieben, bevorzugt acht, weiter bevorzugt neun unterschiedlichen Emissionsspektren eingerichtet, wobei ein jeweiliges Emissionsspektrum ein einzelnes Maximum umfasst.

Bevorzugt ist ein jeweiliges Emissionsspektrum schmalbandig, beispielsweise unter 50 nm FWHM. Darunter, dass ein Emissionsspektrum nur ein einzelnes Maximum umfasst, wird insbesondere verstanden, dass eine Intensität des abgestrahlten Spektrums in einem Bereich zwischen 400 nm - 1200 nm, bevorzugt bis 3500 nm, außerhalb von zwei Halbwertsbreiten Abstand zu dem Maximum unter 25% bezogen auf die Intensität des Maximums beträgt. Bevorzugt weist das Emissionsspektrum keine Nebenmaximum auf.

Beispielsweise umfasst die Beleuchtungseinheit zum Erzeugen der unterschiedlichen Emissionsspektren jeweils eine Leuchtdiode mit einer entsprechenden Abstrahlcharakteristik. Hierbei können auch Filter vorgesehen sein, um ein schmalbandiges Emissionsspektrum zu erzielen.

Gemäß einer weiteren Ausführungsform weist die Bilderfassungseinrichtung eine optische Einrichtung, insbesondere ein Weitwinkelobjektiv, auf.

Dies hat den Vorteil, dass die Bilderfassungseinrichtung einen größeren Bereich des Spülraums erfassen kann. Die optische Einrichtung kann in Form einer Mikrooptik ausgebildet sein. Die optische Einrichtung ist vorzugsweise aus Kunststoff gefertigt und kann zugleich als Schutz für den Sensor dienen. Die Bildanalyseeinheit ist dazu eingerichtet, eine Bildtransformation unter Berücksichtigung der optischen Eigenschaften der optischen Einrichtung durchzuführen, beispielsweise eine Entzerrung des Bildes. Auf diese Weise ist sichergestellt, dass beispielsweise bei dem Ermitteln einer mittleren Bildhelligkeit jeder Bildbereich gleichmäßig gewichtet wird, so dass ein Vergleich mit einem Referenzwert ein korrektes Ergebnis ergibt.

Gemäß einer weiteren Ausführungsform ist ein optisches Element vorgesehen, das dazu eingerichtet ist, das von der Beleuchtungseinheit abgestrahlte Licht räumlich in dem Spülraum zu verteilen.

Mit dem optischen Element lässt sich beispielsweise eine gleichmäßige Ausleuchtung des Spülraums durch die Beleuchtungseinheit erzielen, so dass Abschattungen, beispielsweise durch Spülgut, reduziert werden.

Gemäß einer weiteren Ausführungsform umfasst das optische Element eine Linse, einen Lichtleiter und/oder einen Spiegel.

Insbesondere mittels eines Lichtleiters kann das abgestrahlte Licht umgeleitet und an anderer Stelle im Spülraum abgestrahlt werden. Auf diese Weise kann beispielsweise eine Lichtverteilung erzielt werden, die Ansonsten nur mit einer Mehrzahl an Beleuchtungseinheiten möglich wäre. Zudem kann die Beleuchtungseinheit selbst an einem beliebigen Ort angeordnet sein, wie beispielsweise in einem Maschinengehäuse der Geschirrspülmaschine, wobei das abgestrahlte Licht durch Lichtleiter in den Spülraum geleitet wird.

Es kann vorgesehen sein, dass eine Spülraumwand eine reflektierende Beschichtung aufweist, so dass diese als ein Spiegel dient. Hierbei kann die Spülraumwand zumindest abschnittsweise konkav oder konvex ausgeformt sein, um eine gezielte Ablenkung des einfallenden Lichts zu erzielen.

Gemäß einer weiteren Ausführungsform ist eine Modulationsvorrichtung vorgesehen, die zum Ansteuern der Beleuchtungseinheit mit einem amplitudenmodulierten Ansteuersignal eingerichtet ist, wobei die Bilderfassungseinrichtung einen Trägerfrequenzverstärker zum Erfassen eines jeweiligen Teilbildes in Abhängigkeit des Ansteuersignals umfasst.

Der Trägerfrequenzverstärker kann auch als Lock-In-Verstärker bezeichnet werden. Bei dieser Ausführungsform kann ein Signal-Rausch-Verhältnis des Bildes und/oder der Teilbilder verbessert werden. Insbesondere kann ein Rauschen, das beispielsweise von einer 50 Hz Netzspannung kommt, auf diese Weise ausgeblendet werden.

Es ist eine Referenzvorrichtung zum Bereitstellen einer Referenz-Oberfläche in dem Spülraum angeordnet, wobei ein jeweiliges Teilbild in Abhängigkeit einer Intensität des von der Referenz-Oberfläche reflektierten Lichts kalibriert wird.

Die Referenzvorrichtung kann auch als Weiß-Standard bezeichnet werden. Die Referenzvorrichtung ist vorzugsweise derart ausgebildet, dass diese das Licht der unterschiedlichen spektralen Bereiche, die den Teilbildern zugrunde liegen, zu 100%, mindestens zu 90%, reflektiert. Hierzu kann die Referenzvorrichtung mehrere unterschiedliche Oberflächen aufweisen, die jeweils für einen bestimmten Spektralbereich als Weiß-Standard dienen. Die von der Referenzvorrichtung reflektierte Intensität kann dann zum Normieren der Intensität der Teilbilder genutzt werden. Anstelle von kalibrieren kann man auch von eichen oder normieren sprechen.

Gemäß einer weiteren Ausführungsform ist eine externe Einrichtung vorgesehen, die die Bildanalyseeinheit umfasst, wobei die Geschirrspülmaschine und die externe Einrichtung jeweils eine Kommunikationseinheit zur bidirektionalen Kommunikation aufweisen.

Die externe Einrichtung ist beispielsweise ein Server oder ein Computer. Dies hat den Vorteil, dass ein sehr hohe Rechenleistung zum Durchführen der chemischen Analyse zur Verfügung steht.

Die Kommunikation erfolgt beispielsweise über ein Netzwerk, wie ein LAN oder WLAN, das Internet oder ein Mobilfunknetzwerk. Die Kommunikationseinheit ist zum Herstellen der Verbindung mit der jeweils anderen Kommunikationseinheit eingerichtet. Hierbei können mehrere Technologien zum Einsatz kommen und mehrere Drittgeräte als Vermittler der Verbindung vorhanden sein. Beispielsweise stellt die Kommunikationseinheit der Geschirrspülmaschine eine Verbindung mittels WLAN zu einem Router her, der eine Mobilfunkverbindung in das Internet zu dem Server herstellt.

In Ausführungsformen weist sowohl die Geschirrspülmaschine eine Bildanalyseeinheit auf und zusätzlich ist ein Server vorgesehen, der eine zusätzliche Bildanalyseeinheit aufweist.

Bei dieser Ausführungsform kann beispielsweise der Benutzer entscheiden, ob die Bildanalyse lokal durchgeführt werden soll oder ob das Bild zur Analyse an den Server geschickt werden soll. Zudem kann bei Verbindungsproblemen, bei denen die Kommunikationsverbindung beispielsweise unterbrochen ist, die Bildanalyse lokal erfolgen und bei bestehender Kommunikationsverbindung auf dem Server.

Gemäß einer weiteren Ausführungsform umfasst die Schmutz-Charakteristik eine Information zu in der Anschmutzung enthaltenen Fetten, Proteinen, Kohlenhydraten, Pigmenten, Feuchte und/oder oberflächenaktiven Substanzen.

Oberflächenaktive Substanzen können auch als Surfactants bezeichnet werden. Beispielsweise Reinigungsmittel umfassen solche Substanzen.

Gemäß einer weiteren Ausführungsform ist die Steuerungsvorrichtung zum Ermitteln einer optimierten Reinigungsmittelmischung in Abhängigkeit der empfangenen Schmutz-Charakteristik eingerichtet. Das System weist ein automatisches Dosiersystem auf, welches zum Bereitstellen der optimierten Reinigungsmittelmischung und zum Dosieren der optimierten Reinigungsmittelmischung in eine zum Spülen des Spülguts verwendete Spülflotte eingerichtet ist, wobei die Reinigungsmittelmischung flüssige und/oder feste Bestandteile umfasst, wobei die Reinigungsmittelmischung ein Enzym-Bestandteil, ein Tensid-Bestandteil, ein Bleiche-Bestandteil, ein Seife-Bestandteil, ein Klarspüler-Bestandteil, und dergleichen mehr umfasst.

Dies ist besonders vorteilhaft, da die optimierte Reinigungsmittelmischung auf Basis der Schmutz-Charakteristik gezielt eine Zusammensetzung aufweisen kann, die für die Anschmutzung am effektivsten wirkt. Damit lässt sich der Einsatz von Reinigungsmittel reduzieren, da nur diejenigen Komponenten und nur in derjenigen Menge, die tatsächlich benötigt werden, der Spülflotte zugesetzt wird. Das spart einerseits Ressourcen und schont andererseits die Umwelt.

Mit Tensiden lassen sich beispielsweise Fette effektiv reinigen. Mit Bleiche lassen sich beispielsweise natürliche Farbstoffe und Pigmente effektive reinigen. Der Enzym-Bestandteil umfasst beispielsweise Protease, das bei Proteinen eine effektive Reinigung ermöglicht, und/oder Amylase, das bei Kohlenhydraten eine effektive Reinigung ermöglicht.

Gemäß einem zweiten Aspekt wird ein Verfahren zum Betreiben einer Geschirrspülmaschine, vorzugsweise einer Haushaltsgeschirrspülmaschine, mit einer Steuerungsvorrichtung zum Durchführen eines Spülprogramms zum Spülen von in einem Spülraum anordenbarem Spülgut vorgeschlagen. In einem ersten Schritt wird in dem Spülraum angeordnetes Spülgut beleuchtet. In einem zweiten Schritt wird ein Bild des in dem Spülraum angeordneten und beleuchteten Spülguts erfasst, wobei das Bild eine Mehrzahl von Teilbildern umfasst, von denen jedes eine unterschiedliche spektrale Information des Spülguts aufweist, und es wird eine von einer Referenz-Oberfläche einer in dem Spülraum angeordneten Referenzvorrichtung reflektierte Lichtintensität erfasst, wobei das jeweilige Teilbilde in Abhängigkeit der jeweiligen erfassten reflektierten Lichtintensität kalibriert wird. In einem dritten Schritt die kalibrierten Teilbilder des erfassten Bildes analysiert, wobei das Analysieren das Durchführen einer chemischen Analyse einer Anschmutzung des Spülguts umfasst. In einem vierten Schritt wird eine Schmutz-Charakteristik der Anschmutzung auf Basis der chemischen Analyse ermittelt. In einem fünften Schritt wird das Spülprogramm zum Spülen des Spülguts in Abhängigkeit der ermittelten Schmutz-Charakteristik angepasst.

Dieses Verfahren weist die gleichen Vorteile auf wie das zuvor beschrieben System. Die für das vorgeschlagene System beschriebenen Ausführungsformen und Merkmale gelten für das vorgeschlagene Verfahren entsprechend.

Die vorgeschlagenen Verfahrensschritte werden vorzugsweise mehrfach während der Durchführung eines Spülprogramms durchgeführt, wobei das Spülprogramm jedes Mal erneut in Abhängigkeit der dann ermittelten aktuellen Schmutz-Charakteristik optimiert wird.

Weiterhin wird ein Computerprogrammprodukt vorgeschlagen, welches Befehle umfasst, die bei der Ausführung des Programms durch einen Computer diesen veranlassen, das vorstehend beschriebene Verfahren auszuführen.

Ein Computerprogrammprodukt, wie z.B. ein Computerprogramm-Mittel, kann beispielsweise als Speichermedium, wie z.B. Speicherkarte, USB-Stick, CD-ROM, DVD, oder auch in Form einer herunterladbaren Datei von einem Server in einem Netzwerk bereitgestellt oder geliefert werden. Dies kann zum Beispiel in einem drahtlosen Kommunikationsnetzwerk durch die Übertragung einer entsprechenden Datei mit dem Computerprogrammprodukt oder dem Computerprogramm-Mittel erfolgen.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

Weitere vorteilhafte Ausgestaltungen und Aspekte der Erfindung sind Gegenstand der Unteransprüche sowie der im Folgenden beschriebenen Ausführungsbeispiele der Erfindung. Im Weiteren wird die Erfindung anhand von bevorzugten Ausführungsformen unter Bezugnahme auf die beigelegten Figuren näher erläutert.
Fig. 1 zeigt eine schematische perspektivische Ansicht einer Ausführungsform eines Systems mit einer Geschirrspülmaschine;
Fig. 2 zeigt ein schematisches Blockschaltbild;
Fig. 3 zeigt ein Diagramm eines beispielhaften Ablaufs zum Erfassen eines Bildes umfassend mehrere Teilbilder;
Fig. 4 zeigt ein beispielhaftes Diagramm einer Mehrzahl an Emissionsspektren;
Fig. 5 zeigt eine schematische perspektivische Ansicht einer weiteren Ausführungsform eines Systems mit einer Geschirrspülmaschine;
Fig. 6 zeigt eine schematische Ansicht einer weiteren Ausführungsform eines Systems mit einer Geschirrspülmaschine; und
Fig. 7 zeigt schematisches Blockschaltbild eines beispielhaften Verfahrens zum Betreiben einer Geschirrspülmaschine.

In den Figuren sind gleiche oder funktionsgleiche Elemente mit denselben Bezugszeichen versehen worden, sofern nichts anderes angegeben ist.

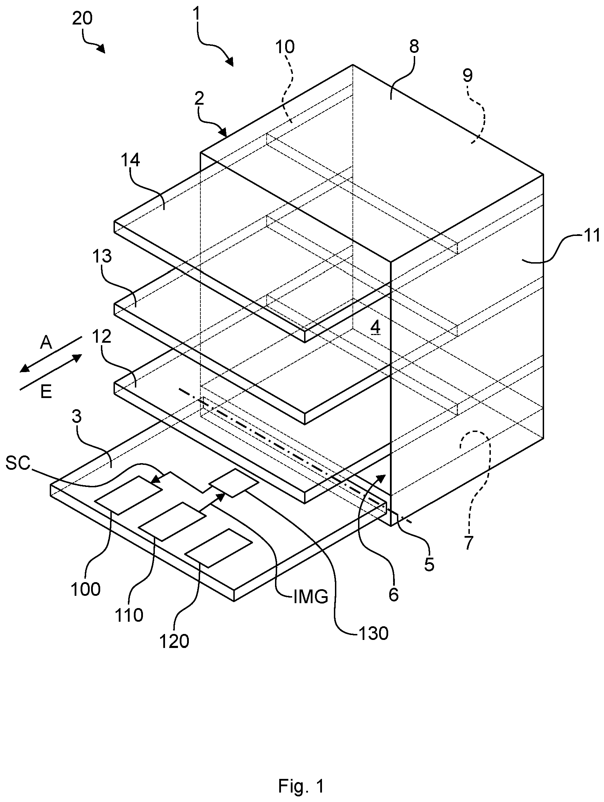

Die Fig. 1 zeigt eine schematische perspektivische Ansicht einer Ausführungsform eines Systems 20 mit einer Geschirrspülmaschine 1, die hier als eine Haushalts-Geschirrspülmaschine ausgebildet ist. Die Haushalts-Geschirrspülmaschine 1 umfasst einen Spülbehälter 2, der durch eine Tür 3, insbesondere wasserdicht, verschließbar ist. Hierzu kann zwischen der Tür 3 und dem Spülbehälter 2 eine Dichteinrichtung vorgesehen sein. Der Spülbehälter 2 ist vorzugweise quaderförmig. Der Spülbehälter 2 kann in einem Gehäuse der Haushalts-Geschirrspülmaschine 1 angeordnet sein. Der Spülbehälter 2 und die Tür 3 können einen Spülraum 4 zum Spülen von Spülgut bilden.

Die Tür 3 ist in der Fig. 1 in ihrer geöffneten Stellung dargestellt. Durch ein Schwenken um eine an einem unteren Ende der Tür 3 vorgesehene Schwenkachse 5 kann die Tür 3 geschlossen oder geöffnet werden. Mit Hilfe der Tür 3 kann eine Beschickungsöffnung 6 des Spülbehälters 2 geschlossen oder geöffnet werden. Der Spülbehälter 2 weist einen Boden 7, eine dem Boden 7 gegenüberliegend angeordnete Decke 8, eine der geschlossenen Tür 3 gegenüberliegend angeordnete Rückwand 9 und zwei einander gegenüberliegend angeordnete Seitenwände 10, 11 auf. Der Boden 7, die Decke 8, die Rückwand 9 und die Seitenwände 10, 11 können beispielsweise aus einem Edelstahlblech gefertigt sein. Alternativ kann beispielsweise der Boden 7 aus einem Kunststoffmaterial gefertigt sein.

Die Haushalts-Geschirrspülmaschine 1 weist ferner zumindest eine Spülgutaufnahme 12 bis 14 auf. Vorzugsweise können mehrere, beispielsweise drei, Spülgutaufnahmen 12 bis 14 vorgesehen sein, wobei die Spülgutaufnahme 12 eine untere Spülgutaufnahme oder ein Unterkorb, die Spülgutaufnahme 13 eine obere Spülgutaufnahme oder ein Oberkorb und die Spülgutaufnahme 14 eine Besteckschublade sein kann. Wie die Fig. 1 weiterhin zeigt, sind die Spülgutaufnahmen 12 bis 14 übereinander in dem Spülbehälter 2 angeordnet. Jede Spülgutaufnahme 12 bis 14 ist wahlweise in den Spülbehälter 2 hinein- oder aus diesem herausverlagerbar. Insbesondere ist jede Spülgutaufnahme 12 bis 14 in einer Einschub-richtung E in den Spülbehälter 2 hineinschiebbar oder hineinfahrbar und entgegen der Einschubrichtung E in einer Auszugsrichtung A aus dem Spülbehälter 2 herausziehbar oder herausfahrbar.

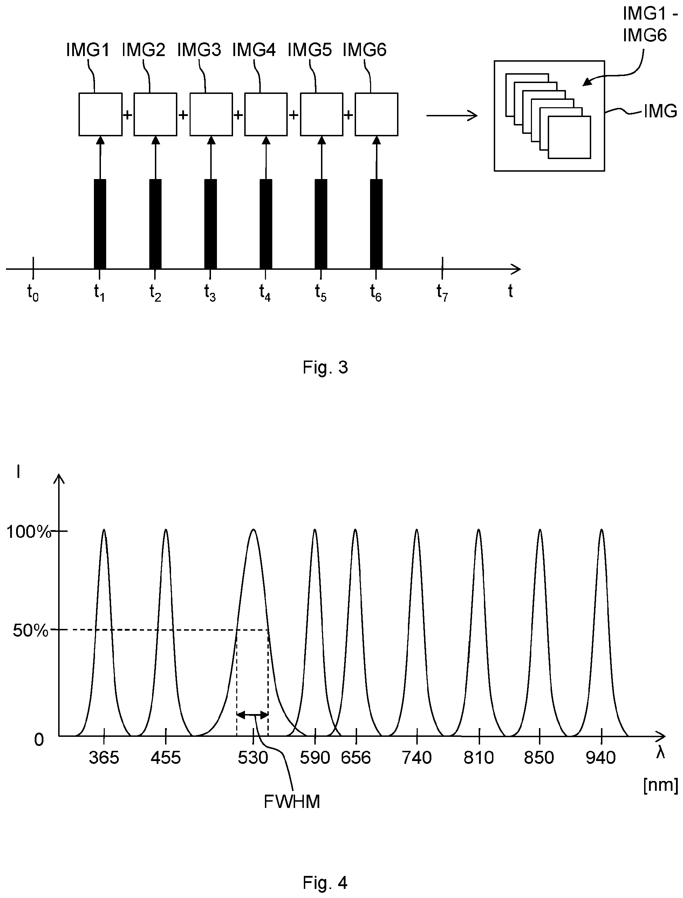

An der Tür 3 der Haushalts-Geschirrspülmaschine 1 sind zu dem eine Steuerungsvorrichtung 100, eine Bilderfassungseinrichtung 110, eine Beleuchtungseinheit 120 und eine Bildanalyseeinheit 130 gezeigt. Die Steuerungsvorrichtung 100 ist zum Durchführen eines Spülprogramms zum Spülen von in dem Spülraum 4 anordenbarem Spülgut eingerichtet. Die Bilderfassungseinrichtung 110 ist zum Erfassen eines Bildes IMG von in dem Spülraum 4 angeordnetem Spülgut eingerichtet. Das Bild IMG umfasst eine Mehrzahl von Teilbildern IMG1 - IMG6 (siehe Fig. 3), von denen jedes eine unterschiedliche spektrale Information des Spülguts aufweist. Die Beleuchtungseinheit 120 ist zum Beleuchten des Spülguts, während die Bilderfassungseinrichtung 110 das Bild IMG erfasst, eingerichtet. Die Bildanalyseeinheit 130 ist dazu eingerichtet ist, das erfasste Bild IMG von der Bilderfassungseinrichtung 110 zu empfangen und auf Basis der Mehrzahl von Teilbildern IMG1 - IMG6 des empfangenen Bildes IMG eine chemische Analyse einer Anschmutzung des Spülguts durchzuführen und als ein Ergebnis der chemischen Analyse eine Schmutz-Charakteristik SC zu ermitteln. Die Steuerungsvorrichtung 100 ist dazu eingerichtet, die Schmutz-Charakteristik SC zu empfangen und das Spülprogramm zum Spülen des Spülguts in Abhängigkeit der empfangenen Schmutz-Charakteristik SC anzupassen.

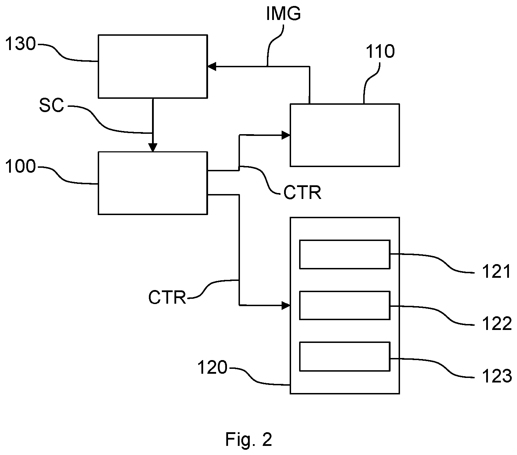

Fig. 2 zeigt ein schematisches Blockschaltbild mit einer Steuerungsvorrichtung 100, einer Bilderfassungseinrichtung 110, einer Beleuchtungseinheit 120 und einer Bildanalyseeinheit 130. Die Anordnung der Fig. 2 kann beispielswiese in dem System der Fig. 1 zum Einsatz kommen. In diesem Beispiel steuert die Steuerungsvorrichtung 100 mittels entsprechenden Steuersignalen CTR die Bilderfassungseinrichtung 110 und die Beleuchtungseinheit 120.

Die Bilderfassungseinrichtung 110 umfasst hier einen digitalen Bildsensor mit einer spektralen Empfindlichkeit in einem Bereich von 300 nm - 1050 nm. Die Beleuchtungseinheit 120 weist hier drei unterschiedliche Leuchtdioden 121, 122, 123 auf, die zum Abstrahlen jeweils unterschiedlicher Emissionsspektren eingerichtet sind. Hierzu die Beleuchtungseinheit 120 auch ein oder mehrere Filter aufweisen (nicht gezeigt). Zum Erfassen des Bildes IMG steuert die Steuerungsvorrichtung 100 beispielsweise die Beleuchtungseinheit 120 so an, dass diese mittels der Leuchtdiode 121 ein erstes Emissionsspektrum abstrahlt und steuert zeitlich synchronisiert den digitalen Bildsensor an, so dass dieser ein Teilbild IMG1 (siehe Fig. 3) erfasst, das beispielsweise in einem Pufferspeicher zwischengespeichert wird. Zeitlich synchronisiert bedeutet beispielsweise, dass der Bildsensor 110 das Teilbild IMG1 aufnimmt, während die Beleuchtungseinheit 120 das Emissionsspektrum abstrahlt. Nachdem das erste Teilbild IMG1 aufgenommen ist, erfolgt der gleiche Vorgang unter Ansteuerung der weiteren Leuchtdioden 122, 123, so dass zumindest zwei weitere Teilbilder IMG2, IMG3 erfasst werden. Es ist darüber hinaus möglich, dass mehrere der Leuchtdioden 121, 122, 123 zeitglich angesteuert werden, um eine Mischbeleuchtung zu erhalten, was als ein weiteres Teilbild zu der spektralen Information beitragen kann.

Die erfassten Teilbilder IMG1, IMG2, IMG3 werden als ein Bild IMG an die Bildanalyseeinheit 130 ausgegeben. Diese führt anhand des Bildes IMG eine chemische Analyse der Anschmutzungen des Spülguts durch. Vorab ermittelt die Bildanalyseeinheit 130 vorzugsweise die für die chemische Analyse relevanten Bildbereiche. Beispielsweise erkennt die Bildanalyseeinheit 130, welche der Bildpixel das Spülgut zeigen und welche nicht. Hierbei führt die Bildanalyseeinheit 130 beispielsweise eine Kantenerkennung des Bildes durch und detektiert dann bestimmte Formen, wie runde Kanten, die von Tellern stammen können. Die chemische Analyse kann dann auf die relevanten Pixel beschränkt werden, was ein verbessertes Analyseergebnis ermöglicht.

Beispielsweise sind Proteine auf dem ersten Teilbild IMG1 besonders gut zu erkennen, da dieses Teilbild IMG1 mit einem Emissionsspektrum aufgenommen wurde, das von Proteinen stark absorbiert wird. Daher entsprechen dunkle Bereiche in dem Teilbild IMG1 einer hohen Protein-Konzentration. Es kann beispielsweise eine mittlere Helligkeit des ersten Teilbildes IMG1 ermittelt werden, was als ein Indikator für die Menge an Proteinen in der Anschmutzung auf dem Spülgut darstellt. Außer der mittleren Bildhelligkeit lassen sich auch verschiedene andere Metriken anwenden, die auch eine genauere Bestimmung ermöglichen können.

Entsprechend werden die weiteren Teilbilder IMG1 - IMG6 analysiert und das Analyseergebnis als die Schmutz-Charakteristik SC an die Steuerungsvorrichtung 100 ausgegeben. Die Schmutz-Charakteristik SC enthält beispielsweise relative und/oder quantitative Angaben zu einer chemischen Zusammensetzung der Anschmutzung des Spülguts und/oder eine Anschmutzungsmenge. Die Schmutz-Charakteristik SC wird beispielsweise in Form eine Tabelle ermittelt und umfasst vorzugsweise auch ermittelte Unsicherheiten zu einzelnen Zahlenwerten.

Die Steuerungsvorrichtung 100 ermittelt daraufhin ein optimiertes Spülprogramm auf Basis der empfangenen Schmutz-Charakteristik SC.

Dieses Vorgehen wird vorzugsweise mehrfach während eines Spülprogrammdurchlaufs durchgeführt, beispielsweise nach dem Vorspülen, nach dem Hauptspülen, nach dem Klarspülen und nach dem Trocknen. In Abhängigkeit der jeweils ermittelten Schmutz-Charakteristik SC kann dann der jeweilige Schritt verlängert werden oder zum nächsten Schritt übergegangen werden. Zudem lassen sich einzelne Parametereinstellungen für die nachfolgenden Schritte weiter anpassen und das Spülprogramm auf diese Weise optimieren.

Die Bilderfassung oder auch die chemische Analyse kann hierbei selektiv auf bestimmte spektrale Bereiche oder chemische Verbindungen beschränkt werden. Beispielsweise können während des Trocknens nur diejenigen spektralen Bereiche, die einen Hinweis auf Feuchte geben können, als Teilbilder erfasst und/oder analysiert werden.

Fig. 3 zeigt ein Diagramm eines beispielhaften Ablaufs zum Erfassen eines Bildes IMG umfassend mehrere Teilbilder IMG1 - IMG6, was nachfolgend auch als Erfassungsroutine bezeichnet wird. Zu einem Zeitpunkt t0 beginnt die Bilderfassungsroutine. Zu den Zeitpunkten t1 - t6 wird jeweils ein Teilbild IMG1 - IMG6 erfasst, wie beispielsweise anhand der Fig. 2 beschrieben. Jedes der Teilbilder IMG1 - IMG6 enthält eine unterschiedliche spektrale Information. Nachdem alle Teilbilder IMG1 - IMG6 erfasst sind, werden diese zu einem Bild IMG zusammengefasst, ohne dass die jeweilige spektrale Information verloren geht. Die verschiedenen Teilbilder IMG1 - IMG6 werden als ein Bild IMG ausgegeben. Zum Zeitpunkt t7 ist die Routine beendet. Diese Routine kann beliebig oft während eines Spülprogrammdurchlaufs durchgeführt werden.

Es sei darauf hingewiesen, dass das Bild IMG nicht zwingend immer die gleiche Anzahl an Teilbildern IMG1 - IMG6 umfasst. So können bei einem späteren Durchlauf der beschriebenen Erfassungsroutine nur einzelne der Teilbilder IMG1 - IMG6 erfasst und als das Bild IMG ausgegeben werden.

Fig. 4 zeigt ein beispielhaftes Diagramm einer Mehrzahl an Emissionsspektren, die beispielsweise von einer Beleuchtungseinheit 120 (siehe Fig. 1, 2, 5 oder 6) abgestrahlt werden, die insgesamt neun unterschiedliche Leuchtdioden aufweist. Die vertikale Achse zeigt die Intensität I, wobei ein jeweiliges Spektrum auf das Maximum bei 100% normiert dargestellt ist. Auf der horizontalen Achse sind beispielhaft die Wellenlängen in nm des Maximums des Emissionsspektrums einer jeweiligen Leuchtdiode angegeben. Beispielsweise lassen sich bei 365 nm einige oberflächenaktive Substanzen, wie sie in Reinigungsmitteln enthalten sind, erkennen. Beispielsweise lässt sich bei 455 nm Glukose (Zucker) erkennen. Beispielsweise lassen sich bei 530 nm, 590 nm, 656 nm, 740 nm und 810 nm einige Farbstoffe oder Pigmente erkennen. Beispielsweise lassen sich bei 850 nm Proteine erkennen. Beispielsweise lassen sich bei 940 nm Fette erkennen.

An dem Spektrum, dessen Maximum bei 530 nm liegt, ist beispielhaft die Halbwertsbreite FWHM dargestellt, die die Breite der Kurve bei 50% Intensität ist. Die in diesem Beispiel dargestellten Emissionsspektren stellen Beispiele für schmalbandige Spektren dar. Es sei darauf hingewiesen, dass die dargestellten Spektren lediglich beispielhaft zu verstehen sind und dass die genaue Form eines jeweiligen Spektrums von der Lichtquelle und von verwendeten Filtern abhängt.

Die Beleuchtungseinheit 120 umfasst beispielsweise eine Mehrfarben-Leuchtdiode, die dazu eingerichtet, wenigstens drei unterschiedliche Emissionsspektren abzustrahlen, vorzugsweise eines im blauen Spektralbereich (400 - 500 nm), eines im grünen Spektralbereich (500 - 600 nm) und eines im roten Spektralbereich (600 - 700 nm). Die Beleuchtungseinheit 120 umfasst vorzugsweise zusätzlich zu der Mehrfarben-Leuchtdiode wenigstens eine weitere Leuchtdiode, die ein Emissionsspektrum im Bereich zwischen 800 - 1000 nm und/oder im Bereich zwischen 300 - 400 nm abstrahlt. Anstelle der Mehrfarben-Leuchtdiode können auch Einzeldioden, wie vorstehend beschrieben, vorgesehen sein.

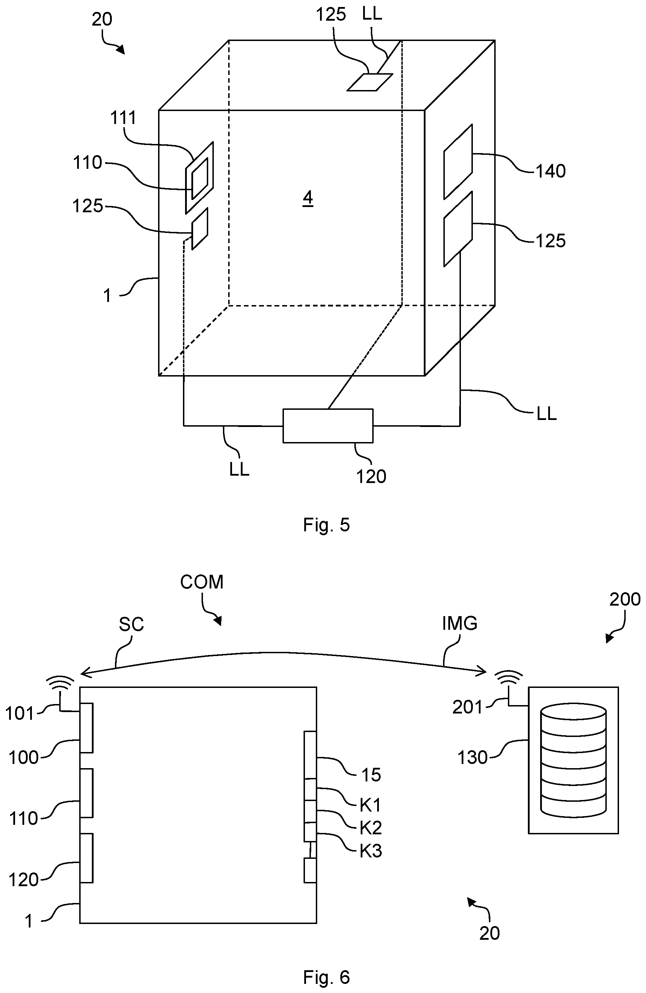

Fig. 5 zeigt eine schematische perspektivische Ansicht einer weiteren Ausführungsform eines Systems 20 mit einer Geschirrspülmaschine 1. In diesem Beispiel ist die Beleuchtungseinheit 120 in einem Maschinengehäuse (nicht dargestellt) der Geschirrspülmaschine 1 angeordnet. Mehrere Lichtleiter LL leiten das von der Beleuchtungseinheit 120 erzeugte Licht zu Fenstern oder Linsen 125, von wo das Licht in den Spülraum 4 abgestrahlt wird und diesen beleuchtet. Die Lichtleiter LL und die Linsen 125 sind Beispiele für optische Elemente. Es lässt sich auf diese Weise eine sehr gute Ausleuchtung des gesamten Spülraums 4 erzielen, selbst wenn größeres Spülgut, wie beispielsweise große Töpfe oder Pfannen, einzelne der Einstrahlfenster 125 überdecken. Alternativ oder zusätzlich zu einer solchen Verteilung des Lichts mittels Lichtleitern LL können mehrere Beleuchtungseinheiten 120 vorgesehen sein, die an unterschiedlichen Stellen des Spülraums 4 angeordnet sind. Auf der linken Seite des Spülraums 4 ist die Bilderfassungseinrichtung 110 angeordnet, die in diesem Beispiel ein optisches Element 111, beispielsweise ein Weitwinkelobjektiv, aufweist, so dass der gesamte Spülraum 4 von der Bilderfassungseinrichtung 110 erfasst werden kann. Eine Steuerungsvorrichtung 100 (siehe Fig. 1, 2 oder 6) und eine Bildanalyseeinheit 130 (siehe Fig. 1 ,2 oder 6) sind ebenfalls vorhanden aber aus Gründen der Übersichtlichkeit in dieser Fig. 5 nicht dargestellt.

Auf der gegenüberliegenden Seite des Spülraums 4 ist eine Referenzvorrichtung 140 angeordnet. Diese weist eine Referenz-Oberfläche auf, die das von der Beleuchtungseinheit 120 abgestrahlte Licht über den gesamten Spektralbereich vollständig oder nahezu vollständig reflektiert. Daher kann die Helligkeit der Referenzvorrichtung 140, die in den jeweiligen Teilbildern IMG1 - IMG6 (siehe Fig. 3) erfasst wird, als Normierungsmaßstab für das jeweilige Teilbild IMG1 - IMG6 dienen.

Alternativ zu einer solchen Referenzvorrichtung 140 kann die Bildanalyseeinheit 130 (siehe Fig. 1, 2 oder 6) auch dazu eingerichtet sein, mittels entsprechender Bildverarbeitungsalgorithmen eine selbstkonsistente Eichung vorzunehmen. Beispielsweise lassen sich saubere Oberflächen des Spülgutes als die Referenz-Oberfläche verwenden. Hierzu wird beispielsweise ermittelt, dass ein bestimmter Bildbereich, der die Oberfläche eines Tellers zeigt (was beispielsweise durch eine Objekterkennung ermittelt wurde), in keinem der Teilbilder IMG1 - IMG6 dunkle Bereiche aufweist, sondern eine homogene Helligkeit hat. Hieraus kann gefolgert werden, dass dieser Bereich sauber ist und daher als die Referenz-Oberfläche geeignet ist.

Fig. 6 zeigt eine schematische Ansicht einer weiteren Ausführungsform eines Systems 20 mit einer Geschirrspülmaschine 1. In diesem Beispiel ist die Bildanalyseeinheit 130 in einer externen Einrichtung 200, die hier als ein Server ausgebildet ist, angeordnet. Die Geschirrspülmaschine 1 und der Server 200 weisen jeweils eine Kommunikationseinheit 101, 201 auf, die zum Herstellen einer Kommunikationsverbindung COM zur bidirektionalen Kommunikation eingerichtet sind. Über diese Kommunikationsverbindung COM überträgt die Kommunikationseinheit 101 das erfasste Bild IMG an den Server 200. Die Bildanalyseeinheit 130 in dem Server 200 führt die chemische Analyse anhand des empfangenen Bildes IMG und auf Basis der umfassten Teilbilder IMG1 - IMG6 (siehe Fig. 3) durch und überträgt die ermittelte Schmutz-Charakteristik SC zurück an die Geschirrspülmaschine 1. Indem die Bildanalyseeinheit 130 in dem Server 200 angeordnet ist, steht für die Bildanalyse und die chemische Analyse eine vergleichsweise hohe Rechenleistung zur Verfügung, weshalb komplexere und/oder genauere Analysemethoden verwendet werden können, was in einer genaueren Schmutz-Charakteristik SC resultieren kann.

Die Geschirrspülmaschine 1 weist in diesem Beispiel ferner ein automatisches Dosiersystem 15 auf, welches mehrere Kammern zur getrennten Aufnahme von einzelnen Reinigungsmittel-Komponenten K1, K2, K3 aufweist. Bei den Komponenten K1, K2, K3 handelt es sich beispielsweise um einen Enzym-Bestandteil K1, einen Bleiche-Bestandteil K2 und einen Tensid-Bestandteil K3. und Das automatische Dosiersystem 15 ist zum Mischen einer Reinigungsmittelmischung basierend auf den einzelnen Komponenten K1, K2, K3 in beliebiger Zusammensetzung eingerichtet. Die Steuerungsvorrichtung 100 ermittelt beispielsweise eine optimierte Reinigungsmittelmischung in Abhängigkeit der Schmutz-Charakteristik SC und veranlasst, dass das automatische Dosiersystem 15 diese Reinigungsmittelmischung bereitstellt und zu einem vorgegebenen Dosierzeitpunkt während der Durchführung eines Spülprogramms in den Spülraum 4 dosiert.

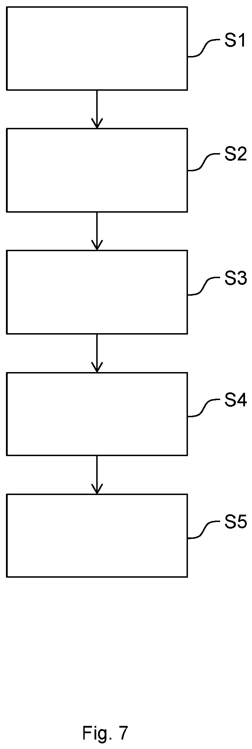

Fig. 7 zeigt schematisches Blockschaltbild eines beispielhaften Verfahrens zum Betreiben einer Geschirrspülmaschine 1, beispielsweise der in den Fig. 1, 5 oder 6 gezeigten. Die Geschirrspülmaschine weist eine Steuerungsvorrichtung 100 zum Durchführen eines Spülprogramms zum Spülen von in einem Spülraum 4 (siehe Fig. 1, 5 oder 6) anordenbarem Spülgut auf. In einem ersten Schritt S1 wird das in dem Spülraum 4 angeordnete Spülgut beleuchtet. In einem zweiten Schritt S2 wird ein Bild IMG (siehe Fig. 1,2,3 oder 6) des in dem Spülraum 4 angeordneten und beleuchteten Spülguts erfasst, wobei das Bild IMG eine Mehrzahl von Teilbildern IMG1 - IMG6 (siehe Fig 3) umfasst, von denen jedes eine unterschiedliche spektrale Information des Spülguts aufweist. In einem dritten Schritt S3 wird jedes Teilbild IMG1 - IMG6 des erfassten Bildes IMG analysiert, wobei eine chemische Analyse einer Anschmutzung des Spülguts durchgeführt wird. In einem vierten Schritt S4 wird eine Schmutz-Charakteristik der Anschmutzung auf Basis der chemischen Analyse ermittelt. In einem fünften Schritt S5 wird das Spülprogramm zum Spülen des Spülguts in Abhängigkeit der ermittelten Schmutz-Charakteristik SC angepasst.

Dieses Verfahren oder zumindest einzelne Schritte des Verfahrens kann oder können während der Durchführung des Spülprogramms mehrfach wiederholt werden, um die Schmutz-Charakteristik SC aktuell zu halten.

Beispielsweise wird zu Beginn des Spülprogramms das Verfahren ein erstes Mal durchlaufen. Die Bildanalyseeinheit 130 ermittelt, dass das Spülgut stark angeschmutzt ist, wobei die Anschmutzungen zu 20% aus Fetten, 50% Kohlenhydraten und 30% Proteinen bestehen, wobei keine Feuchte oder Reinigungsmittelrückstände ermittelt wurden, was als Schmutz-Charakteristik SC ausgegeben wird. Die Steuerungsvorrichtung 100 plant in Abhängigkeit der Schmutz-Charakteristik SC das Spülprogramm, wobei mit einem Vorspülen mit kaltem Wasser begonnen wird. Nach zehn Minuten Vorspülen wird das Verfahren erneut durchgeführt, um eine aktuelle Schmutz-Charakteristik SC zu ermitteln. Beispielsweise wird ermittelt, dass die Hälfte der Kohlenhydrate und ein Drittel der Proteine abgespült wurden, so dass zum Hauptspülen übergegangen wird. Für das Hauptspülen wird der Spülflotte eine optimierte Reinigungsmittelmischung zugesetzt, die von der Steuerungsvorrichtung 100 auf Basis der aktuellen Schmutz-Charakteristik SC ermittelt wurde. Nach 30 Minuten Hauptspülen wird das Verfahren erneut durchgeführt, um eine aktuelle Schmutz-Charakteristik SC zu ermitteln. Es wird ermittelt, dass noch Fette und Proteine an dem Spülgut haften. Die Steuerungsvorrichtung 100 ermittelt eine neue optimierte Reinigungsmittelmischung, um gezielt die noch vorhandenen Fette und Proteine zu lösen. Nach weiteren 20 Minuten Hauptspülen wird das Verfahren erneut durchgeführt und ermittelt, dass keine Anschmutzungen mehr auf dem Spülgut vorhanden sind, das Spülgut also sauber ist. Es werden aber Reinigungsmittelrückstände auf dem Spülgut erfasst, weshalb ein Klarspülen folgt. Nach zehn Minuten Klarspülen wird das Verfahren erneut durchgeführt, wobei ermittelt wird, dass keine Reinigungsmittelrückstände mehr auf dem Spülgut vorhanden sind, so dass zum Trocknen übergegangen wird. Nach 30 Minuten Trocknen wird das Verfahren erneut durchgeführt, wobei ermittelt wird, dass noch Restfeuchte auf dem Spülgut haftet, weshalb das Trocknen fortgesetzt wird. Das Verfahren wird beispielsweise regelmäßig durchgeführt, bis ermittelt wird, dass das Spülgut trocken ist, womit das Spülprogramm beendet ist.

Obwohl die vorliegende Erfindung anhand von Ausführungsbeispielen beschrieben wurde, ist sie vielfältig modifizierbar.

### Verwendete Bezugszeichen:

- 1: Geschirrspülmaschine
- 2: Spülbehälter
- 3: Tür
- 4: Spülraum
- 5: Schwenkachse
- 6: Beschickungsöffnung
- 7: Boden
- 8: Decke
- 9: Rückwand
- 10: Seitenwand
- 11: Seitenwand
- 12: Spülgutaufnahme
- 13: Spülgutaufnahme
- 14: Spülgutaufnahme
- 15: automatisches Dosiersystem
- 20: System
- 100: Steuerungsvorrichtung
- 101: Kommunikationseinheit
- 110: Bildererfassungseinrichtung
- 111: optisches Element
- 120: Beleuchtungseinheit
- 121: Leuchtdiode
- 122: Leuchtdiode
- 123: Leuchtdiode
- 125: optisches Element
- 130: Bildanalyseeinheit
- 140: Referenzvorrichtung
- 200: externe Einrichtung
- 201: Kommunikationseinheit

- A: Ausziehrichtung
- CTR: Steuersignal
- COM: Kommunikationsverbindung
- E: Einschubrichtung
- FWHM: Halbwertsbreite
- IMG: Bild
- IMG1: Teilbild
- IMG2: Teilbild
- IMG3: Teilbild
- IMG4: Teilbild
- IMG5: Teilbild
- IMG6: Teilbild
- K1: Komponente
- K2: Komponente
- K3: Komponente
- LL: optisches Element
- S1: Verfahrensschritt
- S2: Verfahrensschritt
- S3: Verfahrensschritt
- S4: Verfahrensschritt
- S5: Verfahrensschritt
- SC: Schmutz-Charakteristik

## Patentansprüche

1. System (20) mit einer Geschirrspülmaschine (1), vorzugsweise einer Haushaltsgeschirrspülmaschine, mit einer Steuerungsvorrichtung (100) zum Durchführen eines Spülprogramms zum Spülen von in einem Spülraum (4) anordenbarem Spülgut, mit einer Bilderfassungseinrichtung (110) zum Erfassen eines Bildes (IMG) von in dem Spülraum (4) angeordnetem Spülgut, wobei das Bild (IMG) eine Mehrzahl von Teilbildern (IMG1 - IMG6) umfasst, von denen jedes eine unterschiedliche spektrale Information des Spülguts aufweist, mit einer Beleuchtungseinheit (120) zum Beleuchten des in dem Spülraum (4) angeordneten Spülguts, mit einer Referenzvorrichtung (140) zum Bereitstellen einer Referenz-Oberfläche in dem Spülraum (4), mit einer Bildanalyseeinheit (130), die dazu eingerichtet ist, das erfasste Bild (IMG) von der Bilderfassungseinrichtung (110) zu empfangen und auf Basis der Mehrzahl von Teilbildern (IMG1 - IMG6) des empfangenen Bildes (IMG) eine chemische Analyse einer Anschmutzung des Spülguts durchzuführen und als ein Ergebnis der chemischen Analyse eine Schmutz-Charakteristik (SC) der Anschmutzung zu ermitteln, wobei ein jeweiliges Teilbild (IMG1 - IMG6) in Abhängigkeit einer Intensität des von der Referenz-Oberfläche reflektierten Lichts kalibriert wird, und wobei die Steuerungsvorrichtung (100) dazu eingerichtet ist, die Schmutz-Charakteristik (SC) zu empfangen und das Spülprogramm zum Spülen des Spülguts in Abhängigkeit der empfangenen Schmutz-Charakteristik (SC) anzupassen.

2. System nach Anspruch 1, **dadurch gekennzeichnet, dass** die Bilderfassungseinrichtung (110) einen digitalen Bildsensor mit einer spektralen Empfindlichkeit im Bereich von 360 nm - 980 nm, vorzugsweise im Bereich von 300 nm - 1200 nm, aufweist.

3. System nach Anspruch 1 oder 2, **dadurch gekennzeichnet, dass** die Beleuchtungseinheit (120) dazu eingerichtet ist, selektiv ein Emissionsspektrum aus einer Mehrzahl unterschiedlicher Emissionsspektren abzustrahlen.

4. System nach einem der Ansprüche 1 - 3, **dadurch gekennzeichnet, dass** die Beleuchtungseinheit (120) eine Anzahl von Leuchtdioden (121, 122, 123) mit jeweils unterschiedlichem Emissionsspektrum umfasst.

5. System nach einem der Ansprüche 1 - 4, **dadurch gekennzeichnet, dass** die Beleuchtungseinheit (120) und/oder die Bilderfassungseinrichtung (110) einen oder mehrere unterschiedliche Filter aufweist, der oder die jeweils nur für einen bestimmten Spektralbereich durchlässig ist.

6. System nach einem der Ansprüche 1 - 5, **dadurch gekennzeichnet, dass** die Beleuchtungseinheit (120) zum Abstrahlen von mindestens fünf, vorzugsweise sieben, bevorzugt acht, weiter bevorzugt neun unterschiedlichen Emissionsspektren eingerichtet ist, wobei ein jeweiliges Emissionsspektrum ein einzelnes Maximum umfasst.

7. System nach einem der Ansprüche 1 - 6, **dadurch gekennzeichnet, dass** die Bilderfassungseinrichtung (110) eine optische Einrichtung (111), insbesondere ein Weitwinkelobjektiv, aufweist.

8. System nach einem der Ansprüche 1 - 7, **gekennzeichnet durch** ein optisches Element (LL, 125), das dazu eingerichtet ist, das von der Beleuchtungseinheit (120) abgestrahlte Licht räumlich in dem Spülraum (4) zu verteilen.

9. System nach Anspruch 8, **dadurch gekennzeichnet, dass** das optische Element (LL, 125) eine Linse (125), einen Lichtleiter (LL) und/oder einen Spiegel umfasst.

10. System nach einem der Ansprüche 1 - 9, **dadurch gekennzeichnet, dass** eine Modulationsvorrichtung vorgesehen ist, die zum Ansteuern der Beleuchtungseinheit (120) mit einem amplitudenmodulierten Ansteuersignal eingerichtet ist, wobei die Bilderfassungseinrichtung (110) einen Trägerfrequenzverstärker zum Erfassen eines jeweiligen Teilbildes (IMG1 - IMG6) in Abhängigkeit des Ansteuersignals umfasst.

11. System nach einem der Ansprüche 1 - 10, **gekennzeichnet durch** eine externe Einrichtung (200), die die Bildanalyseeinheit (130) umfasst, wobei die Geschirrspülmaschine (1) und die externe Einrichtung (200) jeweils eine Kommunikationseinheit (101, 201) zur bidirektionalen Kommunikation aufweisen.

12. System nach einem der Ansprüche 1 - 11, **dadurch gekennzeichnet, dass** die Schmutz-Charakteristik (SC) eine Information zu in der Anschmutzung enthaltenen Fetten, Proteinen, Kohlenhydraten, Pigmenten, Feuchte und/oder oberflächenaktive Substanzen umfasst.

13. System nach einem der Ansprüche 1 - 12, **dadurch gekennzeichnet, dass** die Steuerungsvorrichtung (100) zum Ermitteln einer optimierten Reinigungsmittelmischung in Abhängigkeit der empfangenen Schmutz-Charakteristik (SC) eingerichtet ist und das System (20) ein automatisches Dosiersystem (15) aufweist, welches zum Bereitstellen der optimierten Reinigungsmittelmischung und zum Dosieren der optimierten Reinigungsmittelmischung in eine zum Spülen des Spülguts verwendete Spülflotte eingerichtet ist, wobei die Reinigungsmittelmischung flüssige und/oder feste Komponenten (K1, K2, K3) umfasst, wobei die Reinigungsmittelmischung einen Enzym-Bestandteil, einen Tensid-Bestandteil, einen Bleiche-Bestandteil, einen Seife-Bestandteil und/oder einen Klarspüler-Bestandteil umfasst.

14. Verfahren zum Betreiben einer Geschirrspülmaschine (1), vorzugsweise einer Haushaltsgeschirrspülmaschine, mit einer Steuerungsvorrichtung (100) zum Durchführen eines Spülprogramms zum Spülen von in einem Spülraum (4) anordenbarem Spülgut, das Verfahren umfassend:
Beleuchten (S1) von in dem Spülraum (4) angeordnetem Spülgut,
Erfassen (S2) eines Bildes (IMG) des in dem Spülraum (4) angeordneten und beleuchteten Spülguts, wobei das Bild (IMG) eine Mehrzahl von Teilbildern (IMG1 - IMG6) umfasst, von denen jedes eine unterschiedliche spektrale Information des Spülguts aufweist, und Erfassen einer von einer Referenz-Oberfläche einer in dem Spülraum (4) angeordneten Referenzvorrichtung (140) reflektierten Lichtintensität,
Kalibrieren des jeweiligen Teilbildes (IMG1 - IMG6) in Abhängigkeit der jeweiligen erfassten reflektierten Lichtintensität,
Analysieren (S3) der kalibrierten Teilbilder (IMG1 - IMG6) des erfassten Bildes (IMG),
wobei das Analysieren das Durchführen einer chemischen Analyse einer Anschmutzung des Spülguts umfasst,
Ermitteln (S4) einer Schmutz-Charakteristik (SC) der Anschmutzung auf Basis der chemischen Analyse, und
Anpassen (S5) des Spülprogramms zum Spülen des Spülguts in Abhängigkeit der ermittelten Schmutz-Charakteristik (SC).

## Claims

1. System (20) with a dishwasher (1), preferably a household dishwasher, with a control device (100) for carrying out a washing program for washing washware which can be arranged in a washing chamber (4), with an image capturing device (110) for capturing an image (IMG) of washware arranged in the washing chamber (4), wherein the image (IMG) comprises a plurality of sub-images (IMG1 - IMG6), each thereof having different spectral information on the washware, with an illumination unit (120) for illuminating the washware arranged in the washing chamber (4), with a reference device (140) for providing a reference surface in the washing chamber (4), with an image analysis unit (130) which is designed to receive the captured image (IMG) from the image capturing device (110) and to carry out a chemical analysis of soiling on the washware on the basis of the plurality of sub-images (IMG1 - IMG6) of the received image (IMG) and to ascertain a dirt characteristic (SC) of the soiling as a result of the chemical analysis, wherein one respective sub-image (IMG1 - IMG6) is calibrated as a function of an intensity of the light reflected by the reference surface, and wherein the control device (100) is designed to receive the dirt characteristic (SC) and adapt the washing program for washing the washware as a function of the received dirt characteristic (SC).

2. System according to in claim 1, **characterised in that** the image capturing device (110) has a digital image sensor with a spectral sensitivity ranging from 360 nm - 980 nm, preferably ranging from 300 nm - 1200 nm.

3. System according to in claim 1 or 2, **characterised in that** the illumination unit (120) is designed to emit selectively an emission spectrum from a plurality of different emission spectra.

4. System according to in one of claims 1 - 3, **characterised in that** the illumination unit (120) comprises a number of light-emitting diodes (121, 122, 123) with in each case a different emission spectrum.

5. System according to in one of claims 1 - 4, **characterised in that** the illumination unit (120) and/or the image capturing device (110) has one or more different filters which in each case is or are permeable only to a specific, preferably narrow, spectral range.

6. System according to in one of claims 1 - 5, **characterised in that** the illumination unit (120) is designed to emit at least five, preferably seven, preferably eight, further preferably nine, different emission spectra, wherein one respective emission spectrum comprises a single maximum.

7. System according to in one of claims 1 - 6, **characterised in that** the image capturing device (110) has an optical device (111), in particular a wide angle lens.

8. System according to in one of claims 1 - 7, **characterised by** an optical element (LL, 125) which is designed to distribute the light emitted by the illumination unit (120) spatially in the washing chamber (4).

9. System according to in claim 8, **characterised in that** the optical element (LL, 125) comprises a lens (125), a light guide (LL) and/or a mirror.

10. System according to in one of claims 1 - 9, **characterised in that** a modulation device is provided, said modulation device being designed to control the illumination unit (120) with an amplitude-modulated control signal, wherein the image capturing device (110) comprises a carrier frequency amplifier for capturing one respective sub-image (IMG1 - IMG6) as a function of the control signal.

11. System according to in one of claims 1 - 10, **characterised by** an external device (200) which comprises the image analysis unit (130), wherein the dishwasher (1) and the external device (200) in each case have a communication unit (101, 201) for bidirectional communication.

12. System according to in one of claims 1 - 11, **characterised in that** the dirt characteristic (SC) comprises information about fats, proteins, carbohydrates, pigments, moisture and/or surface-active substances contained in the soiling.

13. System according to in one of claims 1 - 12, **characterised in that** the control device (100) is designed to ascertain an optimised detergent mixture as a function of the received dirt characteristic (SC) and the system (20) has an automatic metering system (15) which is designed to provide the optimised detergent mixture and to meter the optimised detergent mixture into a washing liquor used for washing the washware, wherein the detergent mixture comprises liquid and/or solid components (K1, K2, K3), wherein the detergent mixture comprises an enzyme component, a surfactant component, a bleach component, a soap component and/or a rinse aid component.

14. Method for operating a dishwasher (1), preferably a household dishwasher, comprising a control device (100) for carrying out a washing program for washing washware which can be arranged in a washing chamber (4), the method comprising:
(S1) the washware which is arranged in the washing chamber (4) is illuminated,
(S2) an image (IMG) is captured of the washware which is arranged in the washing chamber (4) and which is illuminated, wherein the image (IMG) comprises a plurality of sub-images (IMG1 - IMG6), each thereof having different spectral information on the washware, and
an intensity of the light reflected by the reference surface of a reference device (140) arranged in the washing chamber (4) is captured,
the respective sub-image (IMG1 - IMG6) is calibrated as a function of an intensity of the light reflected by the reference surface,
(S3) the calibrated sub-images (IMG1 - IMG6) of the captured image (IMG) are analysed,
wherein the analysis comprises carrying out a chemical analysis of a soiling of the washware,
(S4) a dirt characteristic (SC) of the soiling is ascertained on the basis of the chemical analysis, and
(S5) the washing program for washing the washware is adapted as a function of the ascertained dirt characteristic (SC).

## Revendications

1. Système (20) comprenant un lave-vaisselle (1), de préférence un lave-vaisselle ménager, avec un dispositif de commande (100) pour l'exécution d'un programme de lavage pour le lavage d'articles à laver pouvant être disposés dans un espace de lavage (4), avec un dispositif d'acquisition d'images (10) pour l'acquisition d'une image (IMG) des articles à laver disposés dans l'espace de lavage (4), dans lequel l'image (IMG) comprend une pluralité d'images partielles (IMG1-IMG6), dont chacune présente une information spectrale différente des articles à laver, avec une unité d'éclairage (120) pour éclairer les articles à laver disposés dans l'espace de lavage (4), avec un dispositif de référence (140) pour fournir une surface de référence dans l'espace de lavage (4), avec une unité d'analyse d'images (130), qui est conçue pour recevoir l'image (IMG) saisie par le dispositif d'acquisition d'images (110) et pour effectuer, sur la base de la pluralité d'images partielles (IMG1-IMG6) de l'image (IMG) reçue, une analyse chimique d'une salissure des articles à laver et pour déterminer, en tant que résultat de l'analyse chimique, une caractéristique de saleté (SC) de la salissure, dans lequel une image partielle (IMG1-IMG6) respective est calibrée en fonction d'une intensité de la lumière réfléchie par la surface de référence, et dans lequel le dispositif de commande (100) est conçu pour recevoir la caractéristique de salissure (SC) et pour adapter le programme de lavage afin de laver les articles à laver en fonction de la caractéristique de salissure (SC) reçue.

2. Système selon la revendication 1, **caractérisé en ce que** le dispositif d'acquisition d'images (110) comprend un capteur d'image numérique ayant une sensibilité spectrale dans la plage allant de 360 nm à 980 nm, de préférence dans la plage allant de 300 nm à 1200 nm.

3. Système selon la revendication 1 ou la revendication 2, **caractérisé en ce que** l'unité d'éclairage (120) est conçue pour émettre de manière sélective un spectre d'émission parmi une pluralité de spectres d'émission différents.

4. Système selon l'une des revendications 1 à 3, **caractérisé en ce que** l'unité d'éclairage (120) comprend un certain nombre de diodes électroluminescentes (121, 122, 123) ayant chacune un spectre d'émission différent.

5. Système selon l'une des revendications 1 à 4, **caractérisé en ce que** l'unité d'éclairage (120) et/ou le dispositif d'acquisition d'images (110) présentent un ou plusieurs filtres différents qui ne laissent passer qu'une certaine plage spectrale.

6. Système selon l'une des revendications 1 à 5, **caractérisé en ce que** l'unité d'éclairage (120) est conçue pour émettre au moins cinq, de préférence sept, de préférence huit, de préférence encore neuf spectres d'émission différents, chaque spectre d'émission comprenant un seul maximum.

7. Système selon l'une des revendications 1 à 6, **caractérisé en ce que** le dispositif d'acquisition d'images (110) comporte un dispositif optique (111), en particulier un objectif grand angle.

8. Système selon l'une des revendications 1 à 7, **caractérisé par** un élément optique (LL, 125) conçu pour répartir spatialement la lumière émise par l'unité d'éclairage (120) dans l'espace de lavage (4).

9. Système selon la revendication 8, **caractérisé en ce que** l'élément optique (LL, 125) comprend une lentille (125), un conducteur de lumière (LL) et/ou un miroir.

10. Système selon l'une des revendications 1 à 9, **caractérisé en ce qu'**un dispositif de modulation est prévu, conçu pour commander l'unité d'éclairage (120) avec un signal de commande modulé en amplitude, dans lequel le dispositif d'acquisition d'images (110) comprend un amplificateur de fréquences porteuses pour acquérir une image partielle (IMG1-IMG6) respective en fonction du signal de commande.

11. Système selon l'une des revendications 1 à 10, **caractérisé par** un dispositif externe (200) qui comprend l'unité d'analyse d'images (130), dans lequel le lave-vaisselle (1) et le dispositif externe (200) présentent chacun une unité de communication (101, 201) pour une communication bidirectionnelle.

12. Système selon l'une des revendications 1 à 11, **caractérisé en ce que** la caractéristique de salissure (SC) comprend une information sur les graisses, les protéines, les hydrates de carbone, les pigments, l'humidité et/ou les substances tensioactives contenues dans la salissure.

13. Système selon l'une des revendications 1 à 12, **caractérisé en ce que** le dispositif de commande (100) est conçu pour déterminer un mélange optimisé de produits de nettoyage en fonction de la caractéristique de salissure (SC) reçue et le système (20) présente un système de dosage automatique (15) qui est conçu pour préparer le mélange optimisé de produits de nettoyage et pour doser le mélange optimisé de produits de nettoyage dans un bain lessiviel utilisé pour laver les articles à laver, dans lequel le mélange de produits de nettoyage comprend des composants liquides et/ou solides (K1, K2, K3), dans lequel le mélange de produits de nettoyage comprend un composant enzymatique, un composant tensioactif, un composant de blanchiment, un composant de savon et/ou un agent de rinçage.

14. Procédé pour faire fonctionner un lave-vaisselle (1), de préférence un lave-vaisselle ménager, avec un dispositif de commande (100) pour exécuter un programme de lavage pour laver des articles à laver pouvant être disposés dans un espace de lavage (4), le procédé comprenant :
l'éclairage (S1) des articles à laver disposés dans l'espace de lavage (4),
la saisie (S2) d'une image (IMG) des articles à laver disposés et éclairés dans l'espace de lavage (4), dans lequel l'image (IMG) comprend une pluralité d'images partielles (IMG1-IMG6), dont chacune présente une information spectrale différente des articles à laver,
la détection d'une intensité de la lumière réfléchie par une surface de référence d'un dispositif de référence (140) disposé dans l'espace de lavage (4),
le calibrage de l'image partielle (IMG1-IMG6) respective en fonction de l'intensité de la lumière réfléchie respective détectée,
l'analyse (S3) des images partielles (IMG1-IMG6) calibrées de l'image (IMG) saisie, dans lequel l'analyse comprend la réalisation d'une analyse chimique d'une salissure des articles à laver,
la détermination (S4) d'une caractéristique de saleté (SC) de la salissure sur la base de l'analyse chimique, et
l'adaptation (S5) du programme de lavage pour laver les articles à laver en fonction de la caractéristique de salissure (SC) déterminée.
